# EUROPEAN PATENT SPECIFICATION

(11) **EP 3 217 850 B1**
(45) Date of publication and mention of the grant of the patent: **12.02.2020**
(21) Application number: 15791310.4
(22) Date of filing: 10.11.2015
(51) Int. Cl.: A47J 37/10, A47J 37/07

(54) **A SMOKELESS GRILL PAN**
RAUCHFREIE GRILLPFANNE
PLAQUE DE GRILL SANS FUMÉE

(30) Priority: 10.11.2014 GB 201419934
(43) Date of publication of application: 20.09.2017
(73) Proprietor: Bowens, Gerard, County Galway (IE); Bowens, Sean, County Galway (IE)
(72) Inventor: WOODS, Ronan, County Louth (IE); LOUET, Darren, County Louth (IE); BOWENS, Gerard, County Galway (IE); BOWENS, Sean, County Galway (IE)
(74) Representative: FRKelly
(86) International application number: PCT/EP2015/076164
(87) International publication number: WO 2016/075119

(56) References cited:
- EP-A1- 1 459 664
- EP-A1- 2 702 911
- KR-A- 20130 009 462
- US-A- 1 542 867
- US-A1- 2009 277 338

## Description

### Field

The present application relates to a grill pan for use in commercially available kitchen stoves or cookers.

### Background Of The Invention

Grilling is a form of cooking that involves dry heat applied to the surface of food, commonly from above or below.

Grilling usually involves a significant amount of direct, radiant heat, and tends to be used for cooking meat quickly. Food to be grilled is cooked on a grill (an open wire grid or mesh) with a heat source above. The grill sits within a grill pan, which collects the grease, oil and fat that is produced during grilling. This type of grilling is the most common method of grilling used in the United Kingdom, Commonwealth countries and Ireland. The "grill" is usually a separate part of an oven or cooker where the food is inserted just under the element.

In electric ovens, grilling may be accomplished by placing the food near the upper heating element, with the lower heating element off and the oven door partially open. Both gas and electric ovens often have a separate compartment for grilling, such as a drawer below the flame or one of the stovetop heating element.

Other forms of grilling involve using a grill pan (similar to a frying pan, but with raised ridges to mimic the wires of an open grill), or a griddle (a flat plate heated from below).

Heat transfer to the food when using a grill is primarily via thermal radiation. Heat transfer when using a grill pan or griddle is by direct conduction. In the United States, when the heat source for grilling comes from above, grilling is termed "broiling". In this case, the pan that holds the food is called a broiler pan, and heat transfer is by thermal radiation.

Direct heat grilling can expose food to temperatures often in excess of 260 °C. Grilled meat acquires a distinctive roast aroma and flavour from a chemical process called the Maillard reaction. Therefore grilling is often the most desirable cooking process for certain types of meat. Furthermore, grilling is often presented as a healthy alternative to cooking with oil.

However, there are a number of drawbacks with grilling in the home. As a result of the high temperatures and close proximity to the grilling element, smoke is usually generated. In certain circumstances quite a large volume of smoke can be generated. The smoke can leave an undesirable odour in the home. In residences where air is free to travel between the kitchen and living room (such as most apartments) this can be a particular problem. Odours from the smoke can be held in upholstery, clothing and carpet.

One of the main reasons for excess smoke generation is burning of oil, fat and grease that pools in the grill pan beneath the grill/mesh. The direct heating of these materials by the grilling element can even cause a localised fire to start within the grill pan. Smoke generated from grilling can also cause fire alarms within the home to activate. Therefore grilling usually requires close supervision.

Another drawback of grilling, which is true of any high-temperature frying or baking, is that when meat is grilled at high temperatures, the cooking process can generate carcinogenic chemicals. Two processes are thought to be responsible. Heterocyclic amines - "HCAs are formed when amino acids, sugars, and creatine react at high temperatures." Additionally, polycyclic aromatic hydrocarbons - PAHs are formed when fat and juices from meat grilled directly over an open fire drip onto the fire, causing flames. These flames contain PAHs that then adhere to the surface of the meat. Oil, grease and fat that has collected at the bottom of the grill pan can also ignite to form the aforementioned PAHs.

EP 2 702 911 relates to a roasting pan with a draining device and strainer. The roasting pan is a type that can be used in ordinary household ovens, in industrial ovens, baking ovens and so on. It can also be used for different grilling processes. An example of its application is cooking a roast, when the collected scalding grease and boiling liquids can drained without a risk of burnt fingers and then this grease and liquid can be kept to be used later when preparing the accompanying sauce.

There is therefore a need for a grill pan which addresses at least some of the drawbacks of the prior art.

### Summary

The present invention provides a grill pan comprising a base with an aperture configured for the egress of fat, oil and grease from the grill pan and a closure device or mechanism configured to operably open and close the aperture.

The aperture allows material such as fat, oil and grease to be drained from the grill pan during grilling. Advantageously the removal of such material from the grill pan ensures that the volume of smoke generated during grilling is greatly reduced. That is, the raw material required for smoke generation is no longer present in the grill pan to be exposed to direct radiant heat.

Furthermore, the provision of a closure device on the grill pan ensures that the aperture can be closed at will. In certain circumstances it is desirable to keep the aperture closed and to hold material (such as fat, oil and grease) within the grill pan. Therefore the provision of a closure device ensures the grill pan is not limited to a single configuration wherein the aperture is open.

Preferably, the closure device is further configured to operably open the aperture. Advantageously, the closures device can both open and close the aperture as the user desires. Therefore, the grill pan is not limited to a single configuration.

Preferably, the grill pan further comprises a receptacle tray. The receptacle tray may be configured to collect the fat, oil and grease egressing the aperture.

Advantageously, the receptacle tray provides a handy containment vessel for the materials that are produced during the grilling process. The receptacle tray can be quickly and easily removed for empting and cleaning.

Preferably, the receptacle tray is engageble with the underside of the grill pan. In this manner, the grill pan and the receptacle tray form a single unit that can be easily manipulated by a user. For example, a user does not have to worry about adjusting the location of the receptacle tray when moving the grill pan as it is attached to the grill pan.

Preferably the grill pan includes a slot in which the receptacle tray is slidable. The slot allows the receptacle tray to be easily inserted and retracted. It also serves to guide the receptacle tray.

Preferably the receptacle tray is configured to engage with the closure device when inserted in the slot. Furthermore, the closure device is configured to retract and open the aperture when the receptacle tray is fully inserted in the slot.

In this manner, the insertion of the receptacle tray into the slot also opens the aperture by moving the closure device. This means a user does not have to perform a second action of opening the aperture. Rather both actions of insertion and opening the aperture are performed in one action. As soon as the receptacle tray is fully inserted into the grill pan, the grill pan with receptacle tray is ready for use.

Preferably the closure device is resilient and configured to close the aperture as the receptacle tray is retracted from the slot. Advantageously, a user does not have to carry out a second action of closing the aperture when retracting the receptacle tray from the grill pan. It will be appreciated that the receptacle tray will be regularly inserted and retracted from the slot in the grill pan.

Preferably the closure device is configured to retract and open the aperture upon a force being applied directly on the closure device by the insertion of the receptacle tray into the slot. In this manner, a user cannot insert the receptacle tray in the grill pan without opening the aperture. The user cannot forget to open the aperture.

Preferably, at least a portion of the base of the grill pan is sloped towards the aperture. Advantageously the sloped floor encourages the flow of materials produced by the grilling process towards the aperture.

Preferably, the closure device comprises a raised section shaped to conform to the shape of the aperture. The raised section of the closure device provides a seal around the aperture to ensure that material within the grill pan cannot escape when the aperture is closed.

The slot of the grill pan in which the receptacle tray is placed may be formed by a frame on the underside of the grill pan. The frame provides a secure attachment for the receptacle tray. Furthermore, guide rails may be provided on the frame.

Preferably, the closure device comprises resilient spring steel. This ensures that the closure device returns to its original shape after manipulation by the receptacle tray.

### Brief Description Of The Drawings

The present application will now be described with reference to the accompanying drawings in which:
Figure 1 is a perspective view of the grill pan in accordance with an embodiment of the present invention;
Figure 2 is a perspective view of the grill pan of Figure 1 from underneath;
Figure 3 is an expanded view of the grill pan of Figure 1;
Figure 4 is an expanded view of the grill pan 100 of Figure 3 from beneath;
Figure 5 is a view of the grill pan with a portion of the grill pan cut away;
Figure 6a is a side view of the grill pan shown in figure 5;
Figure 6b is an enlarged view of a portion of Figure 6a;
Figure 7 is a perspective view of the grill pan with a portion of the grill pan removed fore ease of viewing;
Figure 8a is a side view of the grill pan of Figure 7;
Figure 8b is an enlarged view of a portion of Figure 8a;
Figure 9a is perspective view of the closure device removed from the grill pan;
Figure 9b is further perspective view of the closure device removed from the grill pan;
Figure 10 is a perspective view of the grill pan in accordance with another embodiment of the present invention;
Figure 11 a provides a view of the grill pan of the further embodiment with a portion of the grill pan cut away for improved visibility;
Figure 11b provides a similar view as Figure 11 with a receptacle tray removed; and
Figure 12 is an expanded view of the grill pan of Figure 10.

### Detailed Description Of The Drawings

The present teaching will now be described with reference to an exemplary grill pan. It will be understood that this grill pan is provided to assist in an understanding of the present teaching and is not to be construed as limiting in any fashion. Furthermore, elements or components that are described with reference to any one figure may be interchanged with those of other figures without departing from the scope of the present teaching. It will be appreciated that for simplicity and clarity of illustration, where considered appropriate, reference numerals may be repeated among the figures to indicate corresponding or analogous elements.

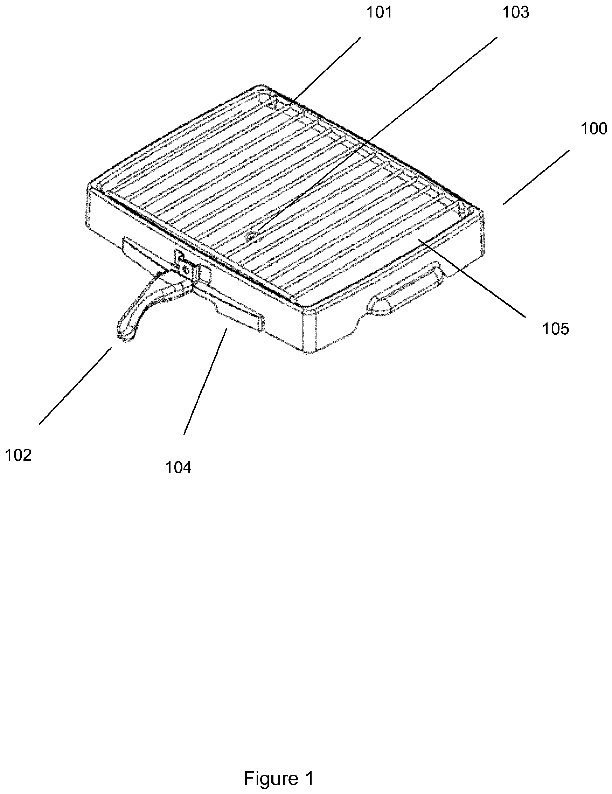

An exemplary arrangement of a grill pan in accordance with an embodiment of the present disclosure is best described with reference to Figure 1. Here, a perspective view of the grill pan 100 is shown. As will be evident to those skilled in the art, the grill pan shares many of the characteristics of a conventional grill pan. For example, the grill pan 100 includes a grill or mesh 101 on which food is placed. Oil, grease fat and any other cooking material falls through the grill 101 during the grilling process. The grill pan 100 also includes a base 105 on which the grill pan 100 sits. Elevated sides of the grill pan 100 ensure that the grease, oil and fat cannot escape from the grill pan 100.

A detachable handle is also provided on the grill pan 100. As is known in the art, such a handle comprises a suitable heat resistant material. The handle 102 is removably attachable to a bracket on the grill pan 100. The handle 102 is generally removed from the grill pan 100 during the grilling process. That is, when the grill pan 100 is inserted in the grilling compartment of a cooker or stove.

The grill pan 100 is generally composed of metal. For example, the grill pan may comprise coated aluminium. However as is known by those skilled in the art, other materials may also be used. The grill pan 100 can become extremely hot during the grilling process. Therefore the grill pan 100 cannot be safely removed from a grilling compartment of a cooker without the use of the handle 102 or an equivalent implement.

The grill pan 100 of the exemplary embodiment further comprises a drain hole or aperture 103. The aperture 103 is an opening in the base 105 of the of the grill pan 100. Although the aperture 103 is shown as circular in the exemplary embodiment of Figure 1, it may be configured in any suitable shape. The aperture 103 is shaped for the egress of fat, oil and grease from the grill pan. Specifically, the aperture 103 provides a smooth path from the base of the grill pan 100, which allows fat, oil, grease and any other materials that result from grilling to exit the grill pan 100.

The base 105 of the grill pan 100 is sloped towards the aperture 103 to encourage the materials produced during grilling to flow towards the aperture 103. In alternative embodiments, a portion of the base is sloped towards the aperture or the base may not be sloped at all. As will be understood by those skilled in the art, it is desirable that such materials are removed from the grill pan 100 during the grilling process. If such materials remain in the base of the grill pan 100, they are directly exposed to high temperature radiant heat and can generate smoke. Removal of the materials from the base of the grill pan 100 ensures that such materials cannot generate undesirable smoke and odours.

The grill pan 100 of the exemplary embodiment further includes a drip tray or receptacle tray 104. The receptacle tray 104 is configured to collect the fat, oil and grease egressing the aperture 103. As can be appreciated from Figure 1, the receptacle tray 104 is operably attached to the underside of the grill pan 100. In particular, the receptacle tray 104 is positioned underneath the aperture 103 such that any materials produced by grilling and exiting the aperture are securely collected within the receptacle tray 104. In operation, the oil, fat and grease as well as any other materials produced by grilling process drop onto the base 105 of the grill pan 100. The materials then drain from the grill pan 100 through the aperture 103. The materials are then collected in the receptacle tray 104.

The receptacle tray 104 may be composed of the same material as the grill pan 100 e.g., coated aluminium. However, the receptacle tray may be formed from any material suitable for securely collecting the material produced by grilling. In one embodiment, the receptacle tray may be disposable. In such cases, the receptacle tray may be composed of lightweight aluminium material. Such material is known in the art for use with disposable barbeques. However, a disposable receptacle tray 104 is not limited to such a material and any material that is both heat and flame resistant may be used.

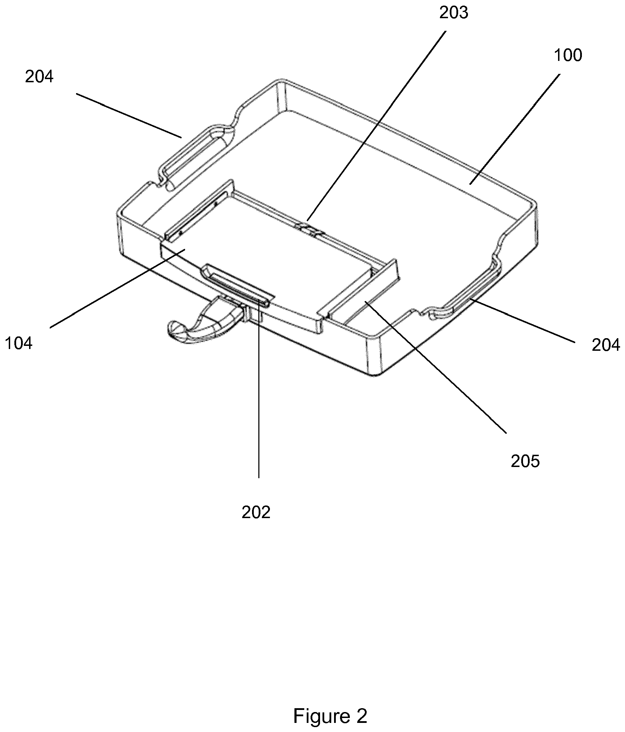

Referring to Figure 2, a perspective view of the grill pan of Figure 1 from underneath is shown. From this view, the configuration of the receptacle tray 104 can be appreciated. The receptacle tray 104 is slidable within a slot on the underside of the grill pan 100. The slot may be formed by a frame 205 that is configured to match the shape of the receptacle tray 104. The frame 205 is integral with the grill pan 100. For example, at the time of manufacturing the grill pan 100, the frame may also be moulded in the same process. The receptacle tray may be easily removed from the grill pan by sliding it out of the slot.

When in position within the slot under the grill pan 100, the receptacle tray may be locked in place using a latch 202. As will be explained in more detail hereinafter, the latch ensured the receptacle tray 104 stays securely in place. For removal of the receptacle tray, a user simply squeezes the latch 202 to release the receptacle tray 104.

A stopper, closure device or mechanism 203 may also be provided on the grill pan 100. The closure device 203 comprises a resilient material that is deformable. The closure device 203 acts as a barricade or hatch. As will be explained in more detail herein after, the closure device 203 is configured to operably close the aperture 103. As can be appreciated from Figure 2, the receptacle tray 104 is configured to contact the closure device 203 when inserted in the slot. The contact of the receptacle tray 104 with the closure 203 holds the closure device 203 in an open position. In this manner, the aperture 103 is open when the receptacle tray 104 in inserted in the slot of the grill pan 100.

It can also be seen in Figure 2 that the grill pan 100 is optionally provided with in-built handles 204. These handles may be used for lifting and manoeuvring the grill pan 100 when it has been removed from the grill compartment of a cooker or stove.

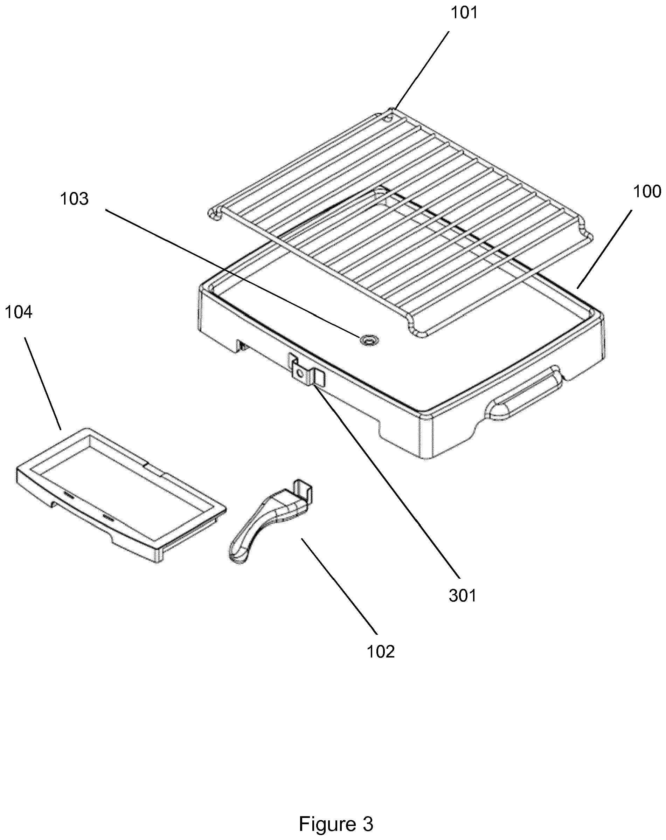

With reference to Figure 3, an exploded view of the grill pan of Figure 1 is shown. In this view the receptacle tray 104 is removed from the grill pan 100. The grill pan handle 102 is also removed. A bracket 301 to which the handle is removable attachable is more clearly visible from this view. Any bracket configuration may be used as long as it is sufficient to securely hold the handle 102.

It will be appreciated that the receptacle tray 104 may be much smaller then the grill pan 100. In the exemplary embodiment, the receptacle tray 104 is approximately one third the size of the grill pan 100. As will be appreciated by those skilled in the art, grill pans 100 can often have a relatively large size such that they are awkward to handle. They may also be awkward to wash as they may not fit in a conventional kitchen sink. The provision of a smaller sized receptacle tray 104 that can be quickly and easily cleaned and washed is particularly advantageous.

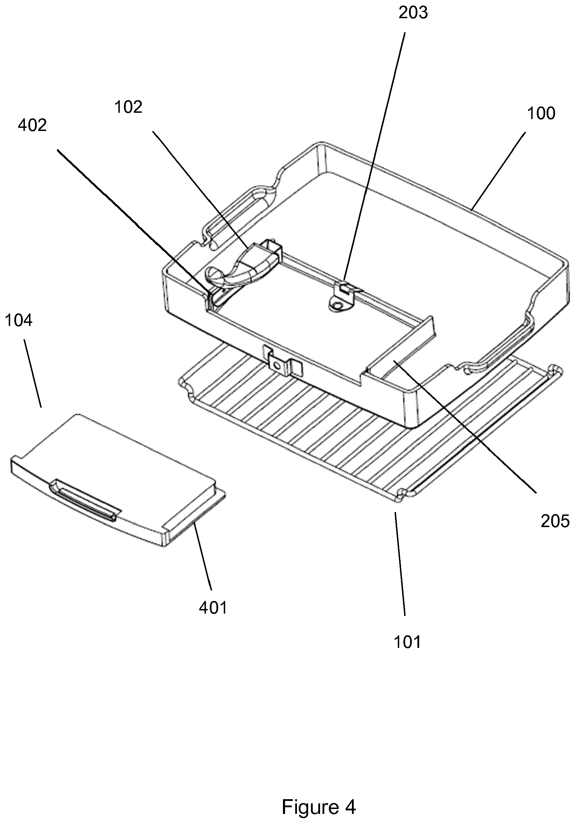

Figure 4 shows a view of the exploded grill pan 100 of Figure 3 from beneath. With the receptacle tray 104 removed, the configuration of the closure device 203 can be more easily observed.

In the exemplary embodiment of Figure 3, the aperture 103 is blocked or closed by the closure device 203. It will be appreciated that since the receptacle tray 104 is not inserted in the slot beneath the grill pan 100, it is not applying a force to the closure device 203. The closure device is configured to be resilient and naturally springs towards the aperture 103. Without the presence of the receptacle tray 104 against the closure device, the closure device 203 moves to close the aperture 103. As will be explained in more detail hereinafter, the closure device 203 is resilient in nature and therefore springs to the closed position once the receptacle tray 104 is retracted within the slot.

The configuration of the underside of the receptacle tray 104 is also shown in more detail in Figure 4. It will be appreciated that the receptacle tray 104 includes a protruding lip 401 at either side of the tray 104. The lips 401 are configured to cooperate with guide rails 402 provided on the grill pan 100. Although only a single guide rail 402 is shown in Figure 4, preferably a guide rail 402 is provided at each side of the slot. The lips 401 sit on top of the guide rails 402 when the receptacle tray 104 is inserted into the slot. The receptacle tray 104 is then free to slide on the guide rails 402.

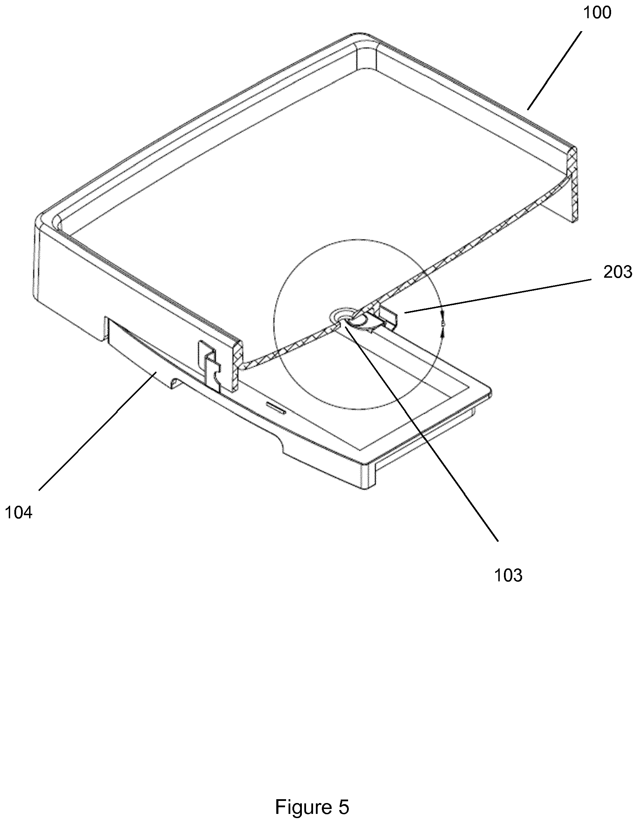

Figure 5 provides a view of the grill pan 100 of the exemplary embodiment with a portion of the grill pan 100 cut away for improved visibility. The grill 101 is also not shown. In this configuration, the receptacle tray 104 is fully inserted in the slot beneath the grill pan 100. The receptacle tray is latched in place. Due to the complete insertion of receptacle tray 104, the closure device 203 is forced back and away from the aperture 103. That is, in this embodiment of the invention, the closure device moved laterally to open the aperture 103. The aperture is therefore open when the receptacle tray 104 is fully inserted in the grill pan 100.

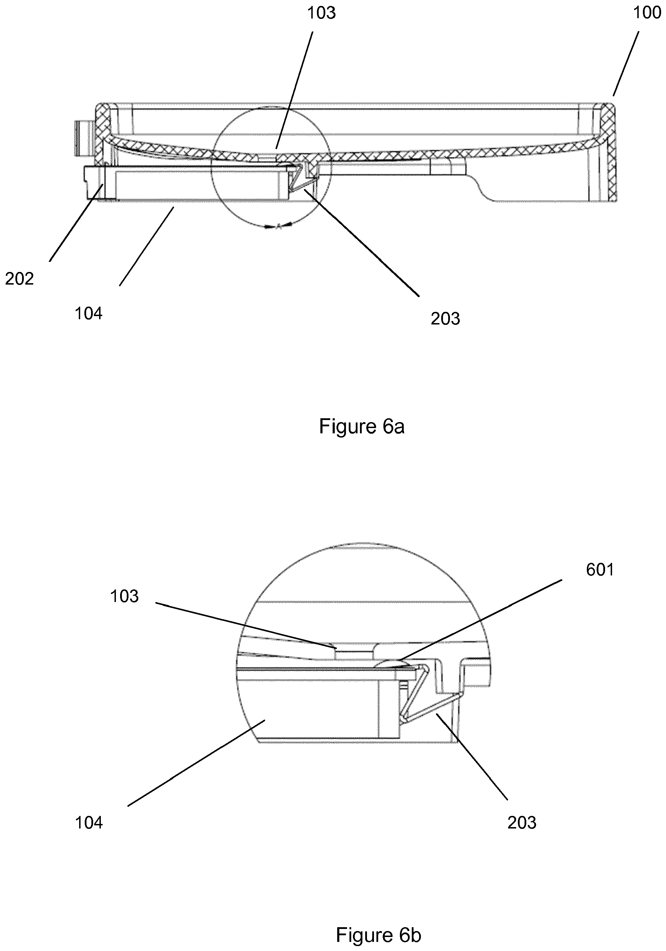

Figure 6a shows a side view of the grill pan 100 of Figure 5. As previously mentioned, a portion of the grill pan 100 has been cut away for ease of visibility. The receptacle tray 104 is fully inserted in the grill pan 100. The closure device 203 is configured to move laterally or horizontally with respect to the base 105 of the grill pan 100. In this manner the closure device 203 is fully retracted and the aperture 103 is open.

The receptacle tray 104 may be held in place by the latch 202. The latch 202 may take any of a number of configurations. The latch must be sufficient to hold the receptacle tray securely. As will be understood by those skilled in the art, the resilient closure device 203 is applying a force against the receptacle tray. That is the closure device is applying a force to eject the receptacle tray from the grill pan 100. Without the latch 202 or an equivalent holding mechanism, the receptacle tray would not be able to maintain the aperture 103 in an open position i.e., the closure device 203 could not be held in the retracted position. In the exemplary embodiment, the latch 202 may comprise a protrusion that is held against the grill pan 100 to stop the receptacle tray from being pushed from the slot in the grill pan 100. The protrusion may be withdrawn using a push button mechanism as is known in the art. It will be understood that once the latch 202 is released the receptacle tray will be pushed outwards by the closure mechanism 203 returning to its natural position closing the aperture 103.

Figure 6b shows an enlarged view of a portion of Figure 6a. In particular, the closure mechanism 203 is shown retracted or deformed by the receptacle tray. The force applied by the receptacle tray 104 as it is pushed into place by a user forces the closure mechanism away from the aperture 103. The closing mechanism 203 is held away from the aperture once the receptacle tray 104 is fully inserted. As described above, the latch 202 of the receptacle tray insures that it stays in place.

It can be seen that the closure mechanism 203 includes a "bead" or raised section 601 that is fashioned to conform to the shape of the aperture 103. In the exemplary embodiment, the raised section 601 is circular to conform to the circular aperture 103. The raised section 601 ensures a sealed closure of the aperture when the receptacle tray is withdrawn from the grill pan 100. Furthermore, the shape and resilient nature of the closure mechanism 203 results in the closure mechanism applying a force upwards against the underside of the base of the grill pan 100. This ensures that once the raised section 601 of the closure mechanism reaches the aperture 103, the raised section is forced upwards and into the aperture.

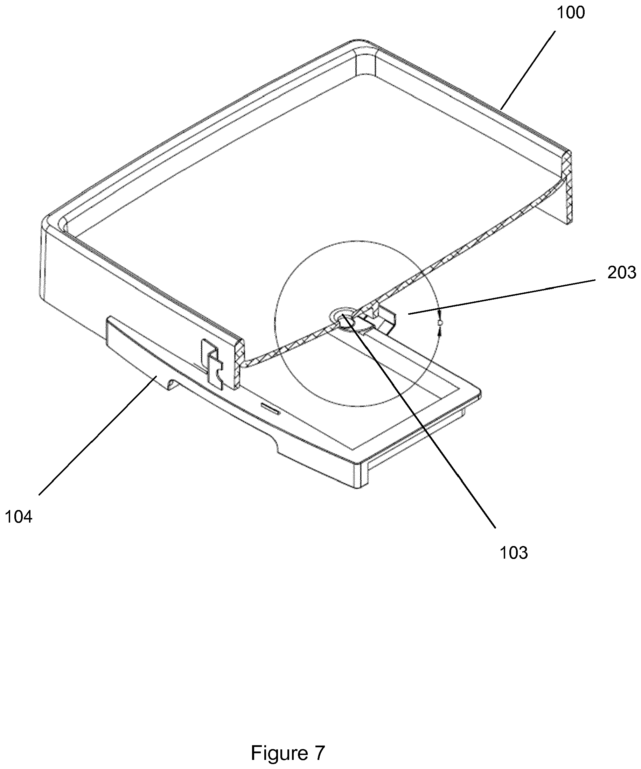

Referring to Figure 7, a view of the grill pan 100 in accordance with an exemplary embodiment is shown. In this configuration, the receptacle tray 104 is slightly retracted such that it protrudes from the grill tray 100. With the receptacle tray 104 retracted, the pressure applied on the closure device 203 is insufficient to maintain the closure device in the retracted position. Therefore the resilient closure device 203 moves towards the aperture 103. The raised section 601 of the closure device 203 enters the aperture 103 and forms a seal around the aperture 103. It will be appreciated that with such a configuration, the aperture is immediately closed upon retraction of the receptacle tray 104. At no point is the aperture open without the receptacle tray being underneath the aperture to capture any material that may be exiting the aperture 103.

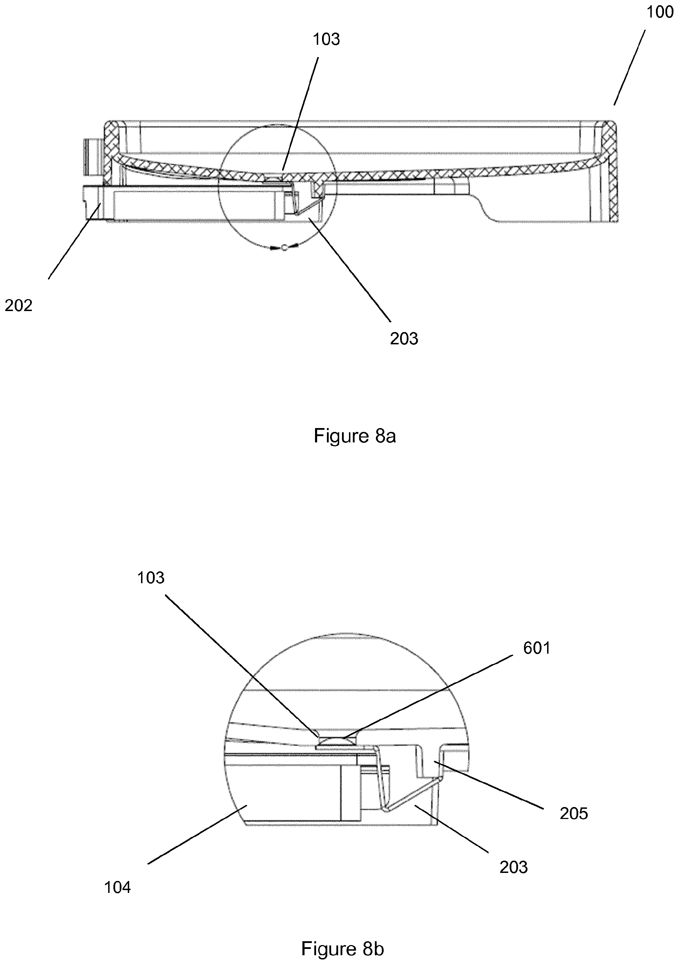

Referring to Figure 8a, a side view of the grill pan 100 of Figure 7 is shown. A portion of the grill pan 100 has been cut away for increased visibility. The aperture is closed by the closure device 203 with the raised section 601 of the closure device within the aperture 103. The latch 202 has been released by a user and the receptacle tray 104 is pushed forward or outwardly by the closure device 203 acting as a spring. It will be appreciated by those skilled in the art that the closure device functions as a cantilever spring.

Figure 8b shows an enlarged view of a portion of Figure 8a. The closure device 203 is configured to move in a plane parallel to the plane of the base of the grill pan 100. In particular, a top portion of the closure device 203, having the protrusion 601 thereon, is configured to in a plane parallel to the plane of the base of the grill pan 100. It will be appreciated that the configuration of the closure device 203 ensures that he aperture 103 is fully closed while the receptacle tray 104 is still beneath the aperture 103. In this manner, any material that exits from the aperture 103 while it is open or semi-open is captured by the receptacle tray 104 beneath the grill pan 100.

It can also be seen from Figure 8b that the closure mechanism is securely attached to the frame 205. As previously described the frame 205 forms the slot in which the receptacle tray 104 is inserted. The side of the frame 205 is removed in Figure 8b for improved visibility. The closure device is shown attached to the back of the frame 205. However the closure device may be attached to any secure surface on the underside of the grill pan 100.

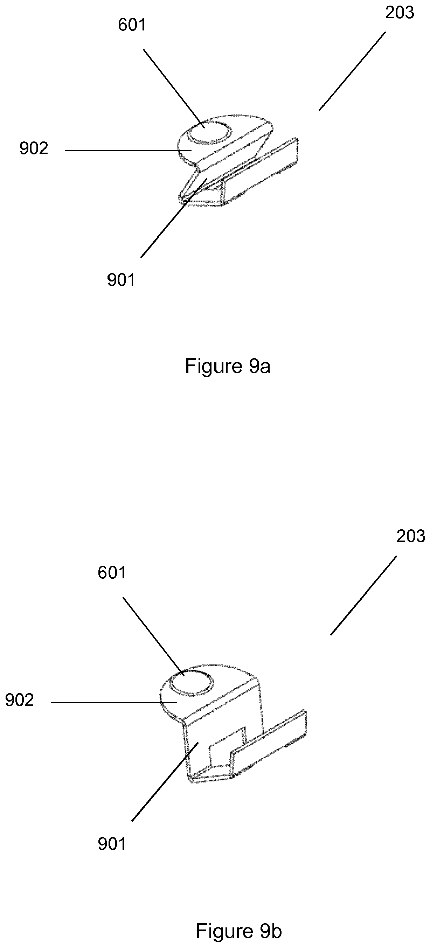

Referring to Figures 9A and 9B, the closure device 203 is shown in isolation. As can be seen in Figures 9a and 9b the closure device 203 comprises a generally U shaped or Z shaped member, a front wall 901 of which has a flange 902 projecting therefrom. The flange has the "bead" or raised section 601, which is engageable in the aperture 103 in the base of the grill pan 100. When the receptacle tray is inserted in the grill pan, an edge of the front wall of the receptacle tray 104 engages the front wall 901 of the U or Z shaped member.

In the configuration of Figure 9a, the closure device 203 is in a retracted position i.e., the closure device is deformed. Specifically, the closure device 203 is in the position that results from the receptacle tray 104 being fully inserted in the grill pan 100. It will be appreciated that the closure device 203 is shaped such that it is resilient and will act against any force that causes the closure device 203 to deform.

Figure 9b shows the closure device in its natural shape i.e., the shape that the closure device takes when no force is applied to it. This is also the shape that the closure device 203 takes when in the closed position on the grill pan 100.

In the exemplary embodiment, the closure device 203 may be constructed of metal. For example spring steel suitably shaped to spring back into place upon removal of any force may be used. It should also be appreciated that the closure device is not limited to the exemplary embodiment shown. For example, a helical spring in conjunction with a plate may be used as the closure device 203. The use of a leaf spring is also envisaged.

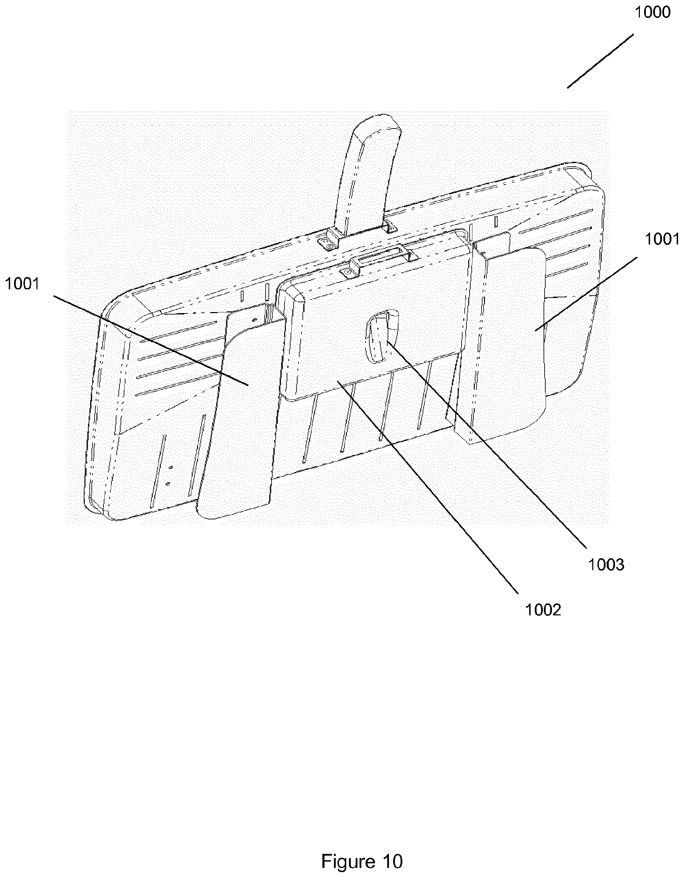

Turning to Figure 10, another embodiment of a grill pan 1000 in accordance with the present teachings is shown. It can be seen in this configuration that the slot is formed by the use of two rails 1001. The rails hold a receptacle tray 1002 on the underside of the grill pan 1000. As will be explained in more detail hereinafter, the receptacle tray 1003 is different to the previously described receptacle tray in that it includes a central protrusion 1003. The protrusion 1003 is a raised portion of the base of the receptacle tray configured to engage the closure device.

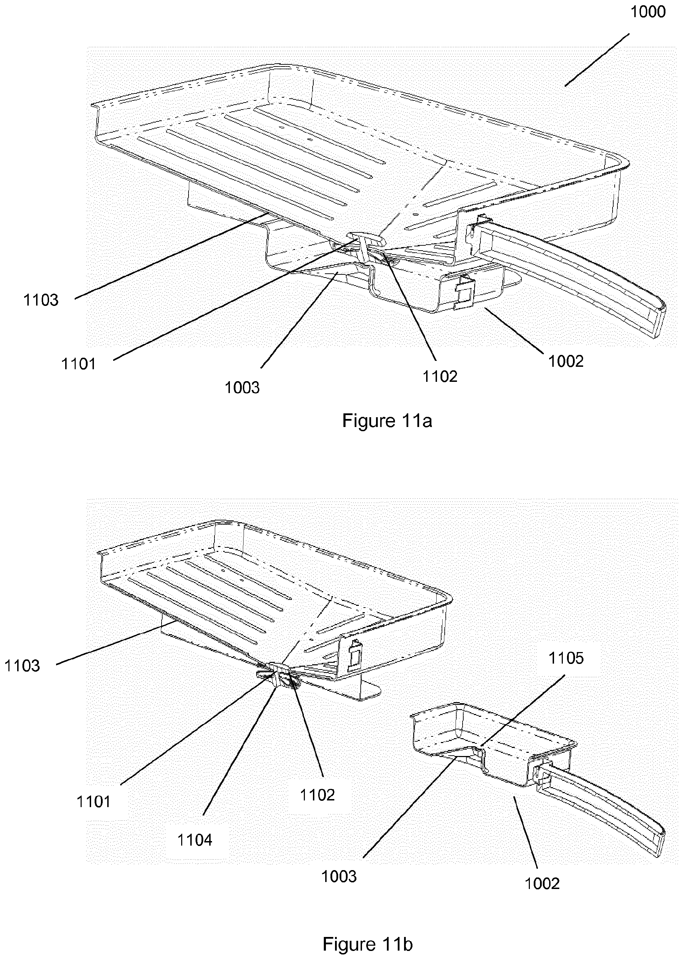

Figure 11a provides a view of the grill pan 1000 of the further embodiment with a portion of the grill pan 1000 cut away for improved visibility. In this view, the receptacle tray 1002 is fully inserted in the slot beneath the grill pan 1000. As can be observed, this embodiment of the grill pan includes a closure device 1101 that is different than the previously described closure device. This closure device 1101 has two planar sections with a connecting section there between. The connecting section is generally perpendicular to the planar sections. The connecting section of the closure device 1101 extends through an opening or aperture 1102 in the base 1103 of the grill pan 1000.

The closure device of this embodiment may also be considered as a poppet valve. The valve includes a tapered plug configured to block the aperture. The plug is disk shape on the end of a shaft also called a valve stem. The portion of the hole or aperture where the plug meets with it is referred to as the 'seat' or 'valve seat'. The poppet valve of Figure 11a includes a second disk beneath the base of the grill pan configured to engage with the receptacle tray 1002.

As will be described in more detail hereinafter, the closure device 1101 acts as a valve or plunger that is actuated by the protrusion 1003 of the receptacle tray 1002. It can be seen from Figure 11a that due to the insertion of the receptacle tray 1002 under the grill pan (in the slot); the protrusion 1003 contacts the closure device 1101 and pushes it generally vertically with respect to the base 1103 of the grill pan 1000. The aperture 1102 in the base 1103 of the grill pan is opened when the closure device 1101 is pushed vertically. Fat, oil and grease and any other materials held in the grill pan 1000 are free to flow through the open aperture 1102 into the receptacle tray 1002.

Turning to Figure 11b, the closure device 1101 can be seen in the closed position i.e., blocking the aperture 1102. That is, the receptacle tray 1002 has been withdrawn from underneath the grill pan 1000 such that the protrusion is no longer contacting the closure device 1101. The closure device drops down such that the planar section at the top of the closure device - first planar section - contacts the inside of the base of the grill pan and closes or blocks the aperture 1102. A spring may be provided between the planar section of the closure device 1101 underneath of the grill pan - second planar portion - and the underside of base 1103 of the grill pan 1000. The spring applies pressure to the closure device forcing it to keep the aperture closed.

It will be appreciated that the protrusion 1003 in the receptacle tray 1002 is sloped or inclined. In this manner, the underside of the closure device - second planar section - contacts the incline of the protrusion as the receptacle tray is inserted on the rails 1001. The incline of the protrusion 1003 ensures that the closure device is gradually and smoothly engaged as the receptacle tray 1002 is inserted. The protrusion may be formed of the same material as the receptacle tray.

The closure device 1101 is configured to move in a plane perpendicular to the plane of the base of the grill pan 1000. In particular, the closure device 1101 has a central axis and is configured to move up and down perpendicular to the plane of the base of the grill pan 1000.

A projection 1104 may be provided on the underside of the second planar portion of the closure device 1101. This projection engages a groove or notch 1105 on the protrusion 1003 of the receptacle tray 1002. The incline of the protrusion 1003 on the receptacle tray ensures that the projection 1104 of the closure device 1101 is guided to the groove 1105 as the receptacle tray 1002 is inserted. In this manner, the receptacle tray 1002 may latch onto the closure device 1101 when inserted in the slot (on the rails 1001) of the grill pan. This configuration ensures that the receptacle tray 1002 is held in place in the slot while also ensures that the closure device is held in the open position - pushed vertically away from the base of the grill pan 1000.

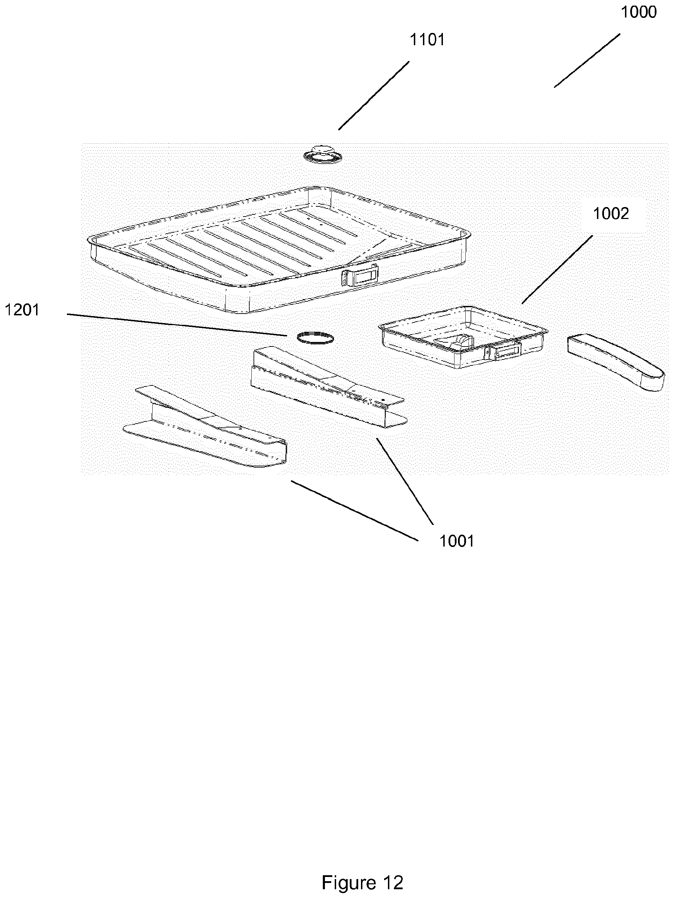

Figure 12 shows a view of the exploded grill pan 1000 in accordance with this further embodiment. With the receptacle tray 104 removed, the configuration of the closure device 1101 can be more easily observed. The previously described connecting section or central shaft of the closure device has been removed for ease of viewing. The spring 1201, which is inserted between the planar section and the underside of the case of the grill pan, can be seen. As the closure device is pushed vertically, the spring 1201 acts to return the closure device or valve to the closed position. That is, the spring 1201 is configured to return the valve to an aperture closed position when the valve is not being actuated.

It should also be appreciated that the spring does not need to be a separate element. The spring may be integral with the closure device 1101 e.g., where a spring leaf projects from the bottom planar section of the closure device to the underside of the base of the grill pan. The closure device may be formed of any suitable resilient material. Preferably the closure device is deformable around the aperture to seal the aperture. The closure device may comprise metal or a heat resistant plastic/rubber.

The words comprises/comprising when used in this specification are to specify the presence of stated features, integers, steps or components but does not preclude the presence or addition of one or more other features, integers , steps, components or groups thereof.

## Claims

1. A grill pan (100, 1000) comprising:
a base with an aperture configured for the egress of fat, oil and grease from the grill pan (100, 1000);
a closure device (203, 1101) configured to operably open and close the aperture;
**characterised in** the at the grill pan further comprises:
a receptacle tray (104, 1002) configured to collect the fat, oil and grease egressing the aperture, the receptacle tray (104, 1002) being engageable with the underside of the grill pan (100, 1000) and the receptacle tray (104, 1002) is configured to engage with the closure device (203, 1101) when engaged with the underside of the grill pan.

2. The grill pan (100, 1000) of claim 1 further comprising a slot in which the receptacle tray (104, 1002) is slidable.

3. The grill pan (100, 1000) of claim 2 wherein the slot is formed by rails on an underside of the grill pan on which the receptacle tray (104, 1002) is slidable.

4. The grill pan (100, 1000) of claim 2 or 3 wherein the receptacle tray (104, 1002) is configured to engage with the closure device (203, 1101) when inserted in the slot.

5. The grill pan (100, 1000) of any one of claims 2 to 4 wherein the closure device (203, 1101) is configured to retract to fully open the aperture when the receptacle tray (104, 1002) is fully inserted in the slot.

6. The grill pan (100, 1000) of claim 5 wherein the closure device (203, 1101) is resilient and configured to close the aperture as the receptacle tray (104, 1002) is retracted from the slot.

7. The grill pan (100, 1000) of claim 5 or 6 wherein the closure device (203, 1101) is configured to retract and open the aperture upon a force being applied directly on the closure device (203, 1101) by the insertion of the receptacle tray (104, 1002) into the slot.

8. The grill pan (100, 1000) of any one of claims 1 to 7 wherein the closure device (203, 1101) comprises a raised section shaped to conform to the shape of the aperture.

9. The grill pan (100, 1000) of any one of claim 8 wherein the closure device (203, 1101) is configured to slide horizontally with respect to the base of the grill pan to open and close the aperture.

10. The grill pan (100, 1000) of any one of claims 1 to 7 wherein the closure device (203, 1101) is configured to slide vertically with respect to the base of the grill pan to open and close the aperture.

11. The grill pan (100, 1000) of any one of claims 2 to 7 wherein the receptacle tray (104, 1002) includes a protrusion in a base of the receptacle tray (104, 1002), the protrusion configured to engage the closure device (203, 1101).

12. The grill pan (100, 1000) of claim 11 wherein the protrusion of the receptacle tray (104, 1002) is configured to push the closure device (203, 1101) vertically with respect to the base of the grill pan (100, 1000) to open the aperture.

13. The grill pan (100, 1000) of any one of claims 10 to 12 wherein the closure device (203, 1101) extends through the base of the base of the grill pan.

14. The grill pan (100, 1000) of any one of claims 1 to 13 wherein the closure device (203, 1101) includes a planar section at each side of the base of the grill pan.

15. The grill pan (100, 1000) of any one of claims 1 to 14 where the closure device (203, 1101) is a poppet valve.

## Patentansprüche

1. Grillpfanne (100, 1000), Folgendes umfassend:
eine Basis mit einer Öffnung, die für das Austreten von Fett und Öl von der Grillpfanne (100, 1000) konfiguriert ist;
eine Schließvorrichtung (203, 1101), die dazu konfiguriert ist, die Öffnung betriebsmäßig zu öffnen und zu schließen;
**dadurch gekennzeichnet, dass** die Grillpfanne ferner Folgendes umfasst:
eine Aufnahmewanne (104, 1002), die dazu konfiguriert ist, das Fett und das Öl, das aus der Öffnung austritt, zu sammeln, wobei die Aufnahmewanne (104, 1002) die Unterseite der Grillpfanne (100, 1000) in Eingriff nehmen kann und die Aufnahmewanne (104, 1002) dazu konfiguriert ist, die Schließvorrichtung (203, 1101) in Eingriff zu nehmen, wenn sie mit der Unterseite der Grillpfanne in Eingriff steht.

2. Grillpfanne (100, 1000) nach Anspruch 1, ferner einen Schlitz umfassend, in den die Aufnahmewanne (104, 1002) gleiten kann.

3. Grillpfanne (100, 1000) nach Anspruch 2, wobei der Schlitz an einer Unterseite der Grillpfanne, an der die Aufnahmewanne (104, 1002) gleiten kann, durch Schienen gebildet ist.

4. Grillpfanne (100, 1000) nach Anspruch 2 oder 3, wobei die Aufnahmewanne (104, 1002) dazu konfiguriert ist, die Schließvorrichtung (203, 1101) in Eingriff zu nehmen, wenn sie in den Schlitz eingefügt wird.

5. Grillpfanne (100, 1000) nach einem der Ansprüche 2 bis 4, wobei die Schließvorrichtung (203, 1101) dazu konfiguriert ist, zurückzufahren, um die Öffnung vollständig zu öffnen, wenn die Aufnahmewanne (104, 1002) vollständig in den Schlitz eingefügt wird.

6. Grillpfanne (100, 1000) nach Anspruch 5, wobei die Schließvorrichtung (203, 1101) elastisch und dazu konfiguriert ist, die Öffnung zu schließen, wenn die Aufnahmewanne (104, 1002) aus dem Schlitz zurückgefahren wird.

7. Grillpfanne (100, 1000) nach Anspruch 5 oder 6, wobei die Schließvorrichtung (203, 1101) dazu konfiguriert ist, zurückzuziehen und die Öffnung zu öffnen, wenn durch das Einfügen der Aufnahmewanne (104, 1002) in den Schlitz eine Kraft direkt auf die Schließvorrichtung (203, 1101) ausgeübt wird.

8. Grillpfanne (100, 1000) nach einem der Ansprüche 1 bis 7, wobei die Schließvorrichtung (203, 1101) einen erhöhten Abschnitt umfasst, der geformt ist, um der Form der Öffnung zu entsprechen.

9. Grillpfanne (100, 1000) nach einem von Anspruch 8, wobei die Schließvorrichtung (203, 1101) dazu konfiguriert ist, in Bezug auf die Basis der Grillpfanne horizontal zu gleiten, um die Öffnung zu öffnen oder zu schließen.

10. Grillpfanne (100, 1000) nach einem der Ansprüche 1 bis 7, wobei die Schließvorrichtung (203, 1101) dazu konfiguriert ist, in Bezug auf die Basis der Grillpfanne vertikal zu gleiten, um die Öffnung zu öffnen oder zu schließen.

11. Grillpfanne (100, 1000) nach einem der Ansprüche 2 bis 7, wobei die Aufnahmewanne (104, 1002) einen Vorsprung in einer Basis der Aufnahmewanne (104, 1002) beinhaltet, wobei der Vorsprung dazu konfiguriert ist, die Schließvorrichtung (203, 1101) in Eingriff zu nehmen.

12. Grillpfanne (100, 1000) nach Anspruch 11, wobei der Vorsprung der Aufnahmewanne (104, 1002) dazu konfiguriert ist, die Schließvorrichtung (203, 1101) in Bezug auf die Basis der Grillpfanne (100, 1000) vertikal zu drücken, um die Öffnung zu öffnen.

13. Grillpfanne (100, 1000) nach einem der Ansprüche 10 bis 12, wobei sich die Schließvorrichtung (203, 1101) durch die Basis der Basis der Grillpfanne erstreckt.

14. Grillpfanne (100, 1000) nach einem der Ansprüche 1 bis 13, wobei die Schließvorrichtung (203, 1101) einen planaren Abschnitt an jeder Seite der Basis der Grillpfanne beinhaltet.

15. Grillpfanne (100, 1000) nach einem der Ansprüche 1 bis 14, wobei die Schließvorrichtung (203, 1101) ein Kugelsitzventil ist.

## Revendications

1. Plaque de grill (100, 1000) comprenant :
une base avec une ouverture conçue pour évacuer le gras, l'huile et la graisse de la plaque de grill (100, 1000) ;
un dispositif de fermeture (203, 1101) conçu pour ouvrir et fermer l'ouverture de manière opérationnelle ;
**caractérisée en ce que** la plaque de grill comprend en outre :
un plateau de réception (104, 1002) conçu pour récupérer le gras, l'huile et la graisse sortant de l'ouverture, le plateau de réception (104, 1002) pouvant venir en prise avec la face inférieure de la plaque de grill (100, 1000) et le plateau de réception (104, 1002) étant conçu pour venir en prise avec le dispositif de fermeture (203, 1101) lorsqu'il vient en prise avec la face inférieure de la plaque de grill.

2. Plaque de grill (100, 1000) selon la revendication 1, comprenant en outre une fente dans laquelle le plateau de réception (104, 1002) peut coulisser.

3. Plaque de grill (100, 1000) selon la revendication 2, dans laquelle la fente est formée par des rails sur une face inférieure de la plaque de grill sur laquelle le plateau de réception (104, 1002) peut coulisser.

4. Plaque de grill (100, 1000) selon la revendication 2 ou 3, dans laquelle le plateau de réception (104, 1002) est conçu pour venir en prise avec le dispositif de fermeture (203, 1101) lorsqu'il est inséré dans la fente.

5. Plaque de grill (100, 1000) selon l'une quelconque des revendications 2 à 4, dans laquelle le dispositif de fermeture (203, 1101) est conçu pour se rétracter afin d'ouvrir complètement l'ouverture lorsque le plateau de réception (104, 1002) est complètement inséré dans la fente.

6. Plaque de grill (100, 1000) selon la revendication 5, dans laquelle le dispositif de fermeture (203, 1101) est élastique et conçu pour fermer l'ouverture lorsque le plateau de réception (104, 1002) est retirée de la fente.

7. Plaque de grill (100, 1000) selon la revendication 5 ou 6, dans laquelle le dispositif de fermeture (203, 1101) est conçu pour se rétracter et ouvrir l'ouverture lors de l'application d'une force directement sur le dispositif de fermeture (203, 1101) par l'insertion du plateau de réception (104, 1002) dans la fente.

8. Plaque de grill (100, 1000) selon l'une quelconque des revendications 1 à 7, dans laquelle le dispositif de fermeture (203, 1101) comprend une section surélevée dont la forme épouse la forme de l'ouverture.

9. Plaque de grill (100, 1000) selon la revendication 8, dans laquelle le dispositif de fermeture (203, 1101) est conçu pour coulisser horizontalement par rapport à la base de la plaque de grill pour ouvrir et fermer l'ouverture.

10. Plaque de grill (100, 1000) selon l'une quelconque des revendications 1 à 7, dans laquelle le dispositif de fermeture (203, 1101) est conçu pour coulisser verticalement par rapport à la base de la plaque de grill pour ouvrir et fermer l'ouverture.

11. Plaque de grill (100, 1000) selon l'une quelconque des revendications 2 à 7, dans laquelle le plateau de réception (104, 1002) comporte une saillie dans une base du plateau de réception (104, 1002), la saillie étant conçue pour venir en prise avec le dispositif de fermeture (203, 1101).

12. Plaque de grill (100, 1000) selon la revendication 11, dans laquelle la saillie du plateau de réception (104, 1002) est conçue pour pousser le dispositif de fermeture (203, 1101) verticalement par rapport à la base de la plaque de grill (100, 1000) pour ouvrir l'ouverture.

13. Plaque de grill (100, 1000) selon l'une quelconque des revendications 10 à 12, dans laquelle le dispositif de fermeture (203, 1101) s'étend à travers la base de la base de la plaque de grill.

14. Plaque de grill (100, 1000) selon l'une quelconque des revendications 1 à 13, dans laquelle le dispositif de fermeture (203, 1101) comporte une section plane de chaque côté de la base de la plaque de grill.

15. Plaque de grill (100, 1000) selon l'une quelconque des revendications 1 à 14, dans laquelle le dispositif de fermeture (203, 1101) est une soupape champignon.
